# EUROPEAN PATENT APPLICATION

(11) **EP 4 415 448 A1**
(43) Date of publication of application: **14.08.2024**
(21) Application number: 21959727.5
(22) Date of filing: 09.10.2021
(51) Int. Cl.: H04W 72/04

(54) **MULTI-LINK COMMUNICATION METHOD AND COMMUNICATION APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Hughes, Andrea Michelle
(86) International application number: PCT/CN2021/122875
(87) International publication number: WO 2023/056637

(57) **Abstract**

The present disclosure provides multi-link communication methods and communication apparatuses. The communication method may include: determining a first message frame, where the first message frame includes an information field indicating one or more links of a station supporting multi-link traffic to receive a buffered downlink data frame; and sending the first message frame.

## Description

### TECHNICAL FIELD

The present disclosure relates to the field of wireless communication, and more specifically, to multi-link communication methods and communication apparatuses.

### BACKGROUND

At present, a research scope of Wi-Fi technology is: bandwidth transmission of 320 MHz, aggregation and collaboration of multiple frequency bands, etc. It is expected to improve a speed and throughput by at least four times compared with existing standards, and its main application scenarios are video transmission, augmented reality (AR), virtual reality (VR), etc.

The aggregation and collaboration of multiple frequency bands (links) refers to simultaneous communication between devices in frequency bands such as 2.4 GHz, 5 GHz, and 6 GHz. It is necessary to define a new media access control (MAC) mechanism to manage the simultaneous communication between devices in multiple frequency bands. In addition, it is expected that the aggregation and collaboration of multiple frequency bands can support low-latency transmission.

At present, a maximum bandwidth supported by aggregation and collaboration of multiple frequency bands technology is 320 MHz (160 MHz+160 MHz), and the technology may also support 240 MHz (160 MHz+80 MHz) and other bandwidths.

In current technology, a station (STA) and an access point (AP) can be multi-link devices (MLDs), and they support a function of sending and/or receiving in multi-links (multiple links). Therefore, in the current technology, multiple links can exist between the STA and the AP, and a communication between these two devices in multi-links is being studied.

### SUMMARY

Aspects of the present disclosure will solve at least the above problems and/or disadvantages. Various embodiments of the present disclosure provide the following technical solutions.

According to an example embodiment of the present disclosure, a multi-link communication method is provided. The communication method can be performed by an access point supporting multi-link traffic, and includes: determining a first message frame, where the first message frame includes an information field indicating one or more links of a station supporting multi-link traffic to receive a buffered downlink data frame; and sending the first message frame.

According to an example embodiment of the present disclosure, a multi-link communication method is provided. The communication method can be performed by a station supporting multi-link traffic, and includes: receiving a first message frame, where the first message frame includes an information field defining one or more links of the station supporting multi-link traffic to receive a buffered downlink data frame; and performing a communication operation based on the first message frame.

According to an example embodiment of the present disclosure, a multi-link communication apparatus is provided. The communication apparatus can be applied to an access point supporting multi-link traffic, and includes: a processing module, configured to determine a first message frame, where the first message frame includes an information field defining one or more links of a station supporting multi-link traffic to receive a buffered downlink data frame; and a transceiving module, configured to send the first message frame.

According to an example embodiment of the present disclosure, a multi-link communication apparatus is provided. The communication apparatus can be applied to a station supporting multi-link traffic, and includes: a transceiving module, configured to receive a first message frame, where the first message frame includes an information field defining one or more links of the station supporting multi-link traffic to receive a buffered downlink data frame; and a processing module, configured to perform a communication operation based on the first message frame.

According to an example embodiment of the present disclosure, an electronic apparatus is provided. The electronic apparatus includes a memory, a processor and a computer program stored in the memory and operable on the processor. The processor, when executing the computer program, implements the method as described above.

According to an example embodiment of the present disclosure, a computer-readable storage medium is provided. A computer program is stored on the computer-readable storage medium. The computer program, when executed by a processor, implements the method as described above.

Example embodiments of the present disclosure provide technical solutions that improve spectrum utilization.

### BRIEF DESCRIPTION OF DRAWINGS

The above and other features of embodiments of the present disclosure will be more apparent by describing in detail example embodiments of the present disclosure with reference to the accompanying drawings, in which:
FIG. 1 is an exemplary schematic diagram illustrating a multi-link communication scenario.
FIG. 2 is a flowchart illustrating a multi-link communication method according to an embodiment of the present disclosure.
FIG. 3 is a flowchart illustrating a multi-link communication method according to an embodiment of the present disclosure.
FIG. 4 is a block diagram illustrating a multi-link communication apparatus according to an embodiment of the present disclosure.

### DETAILED DESCRIPTION

The following description with reference to the accompanying drawings is provided to help a comprehensive understanding of various embodiments of the present disclosure as defined by the appended claims and their equivalents. Various embodiments of the present disclosure include various specific details, which are to be considered as exemplary only. In addition, for the sake of clarity and conciseness, descriptions of well-known technologies, functions and configurations may be omitted.

The terms and words used in the present disclosure are not limited to written meanings, but are only used by inventors to enable a clear and consistent understanding of the present disclosure. Therefore, for those skilled in the art, the description of various embodiments of the present disclosure is provided for illustrative purposes only, and not for limiting purposes.

It should be understood that singular forms "a," "an," "said," and "the" used herein may also include plural forms unless the context clearly indicates otherwise. It should be further understood that the word "including" used in the present disclosure refers to a presence of the described features, integers, steps, operations, elements and/or components, but does not exclude a presence or addition of one or more other features, integers, steps, operations, elements, components and/or groups thereof.

It will be understood that although the terms "first," "second," and the like may be used herein to describe various elements, these elements should not be limited by these terms. These terms are only used to distinguish one element from another. Therefore, a first element discussed below may be referred to as a second element without departing from the teaching of example embodiments.

It should be understood that when an element is referred to as "connected" or "coupled" to another element, it may be directly connected or coupled to the other element, or there may be intermediate elements. Furthermore, "connected" or "coupled" as used herein may include wireless connection or wireless coupling. Term "and/or" or expression "at least one/at least one of ......" as used herein includes any and all combinations of one or more of items listed therein.

Unless otherwise defined, all terms (including technical terms and scientific terms) used herein have the same meaning as commonly understood by ordinary technicians in the field to which the present disclosure belongs.

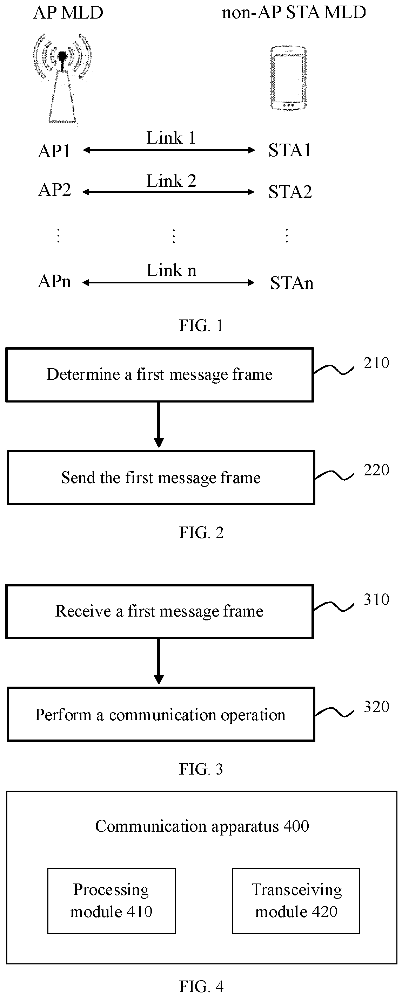

FIG. 1 is an exemplary schematic diagram illustrating a multi-link communication scenario.

In a wireless local area network, a basic service set (BSS) can be composed of an AP and one or more stations (STAs) communicating with the AP. A basic service set can be connected to a distribution system (DS) through its AP, and then access to another basic service set to form an extended service set (ESS).

The AP may be a wireless network switch used in a wireless network and may also be an access device of a wireless network. An AP device can be used as a wireless base station, which is mainly used as a bridge to connect a wireless network to a wired network. With this access point (AP), the wired network and wireless network can be integrated.

The AP may include software applications and/or circuits, so that other types of nodes in the wireless network can communicate with outside and inside of the wireless network through the AP. In some examples, as an example, the AP may be a terminal device or a network device equipped with a wireless fidelity (Wi-Fi) chip.

As an example, a station (STA) may include, but is not limited to, a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, and the like.

In an example embodiment of the present disclosure, an AP and a STA may devices supported multi-link, for example, they may be represented as an AP MLD and a non-AP STA MLD, respectively. For convenience of description, in the following, an example in which an AP communicates with an STA in multi-links is mainly described. However, example embodiments of the present disclosure are not limited to this.

In FIG. 1, by way of example only, an AP MLD may represent an access point supporting a multi-link traffic (communication) function, and a non-AP STA MLD may represent a station supporting a multi-link traffic (communication) function. Referring to FIG. 1, AP MLD can operate in n links, such as AP1, AP2 to APn as shown in FIG. 1, and non-AP STA MLD can also operate in n links, such as STA1, STA2 to STAn as shown in FIG. 1, where n is a natural number greater than 1. In an example of FIG. 1, it is assumed that AP1 and STA1 communicate through a corresponding first link: Link 1, and similarly, AP2 to APn communicate with STA2 to STAn through a second link: Link 2 to an n-th link: Link n, respectively. In addition, Link 1 to Link n can be multiple links at different frequencies, for example, links at 2.4 GHz, 5 GHz, and 6 GHz, etc., or several links with same or different bandwidths at 2.4 GHz, 5 GHz, 6 GHz. In addition, multiple channels can exist in each link. However, it should be understood that the communication scenario shown in FIG. 1 is only exemplary, and a concept of the present disclosure is not limited to this. For example, an AP MLD may be linked to a plurality of non-AP STA MLDs, or an AP may communicate with a plurality of other types of stations in each link. In addition, although it is shown in FIG. 1 that both AP MLD and non-AP STA MLD may have n links, the present disclosure is not limited to this, and the number of links that AP MLD and non-AP STA MLD may be different.

Since a device can support multi-link traffic, a non-AP STA MLD with multi-link traffic can receive a buffered downlink data frame in multiple links. However, the prior art lacks a corresponding mechanism on how the AP MLD defines that the non-AP STA MLD receives the buffered downlink data frame in one or more links. In view of this, a communication method and a communication apparatus in multiple links according to embodiments of the present disclosure are provided.

FIG. 2 is a flowchart illustrating a multi-link communication method according to an embodiment of the present disclosure. The communication method shown in FIG. 2 can be applied to an access point supporting multi-link traffic, for example, the AP MLD shown in FIG. 1.

Referring to FIG. 2, at step 210, a first message frame can be determined. According to an embodiment of the present disclosure, the first message frame may include an information field indicating a link of a station supporting multi-link traffic (for example, the non-AP STA MLD shown in FIG. 1) to receive a buffered downlink data frame. In an embodiment of the present disclosure, a data frame may be mapped to a corresponding traffic identification (TID), and a link to which the non-AP STA MLD receives the buffered downlink data frame may be a link to which the TID is mapped (e.g., a mapping of TIDs to corresponding links formed based on a TID-to-Link mechanism). For example, a downlink data frame may be buffered to one or more links, and an information field of the first message frame may define such one or more links.

In an embodiment of the present disclosure, there are many ways to determine the first message frame. For example, the first message frame can be generated according to at least one of the following situations: a network situation, a load situation, a hardware capability of a sending/receiving device, a service type, and relevant protocol provisions, and the embodiment of the present disclosure is not particularly limited. In an embodiment of the present disclosure, the first message frame can further be acquired from an external device, and the embodiment of the present disclosure is not particularly limited.

According to an embodiment of the present disclosure, the first message frame may be, for example, an association response frame, a re-association response frame, a multi-link setup response frame, a re-multi-link setup response frame, or a TID-to-Link mapping response frame. However, the present disclosure is not limited to this, and other types of frames (e.g., management frames) capable of carrying information fields are also feasible. As an embodiment of the present disclosure, the information field in the first message frame may be included in an MAC frame header portion of the first message frame.

For example, considering that a TID-to-Link mapping may occur in a multi-link (re)setup process, the information field can be carried in an MAC frame header portion of an association response frame, re-association response frame, multi-link setup response frame, or re-multi-link setup response frame. The first message frame may be an association response frame, a re-association response frame, a multi-link setup response frame, a re-multi-link setup response frame, and the communication method shown in FIG. 2 may be carried out during the multi-link (re)setup process.

For example, the TID-to-Link mechanism can also be completed through a TID-to-Link mapping request frame and a TID-to-Link mapping response frame, and the information field can be carried in an MAC frame header portion of a TID-to-Link mapping response frame. The first message frame may be a TID-to-Link mapping response frame, and the communication method shown in FIG. 2 may be carried out in a process of realizing TID-to-Link mapping.

An embodiment of the information field in the first message frame will be described in detail below.

For example, the information field in the first message frame may be determined based on the number of links supported by the AP MLD and the non-AP STA MLD (e.g., n as described with reference to FIG. 1).

According to an embodiment of the present disclosure, the information field in the first message frame may include a plurality of first bits respectively, corresponding to multi-links supported by the AP MLD and the non-AP STA MLD. In the case that a corresponding first bit is set to a first value (e.g., but not limited to "1"), it is indication information identifying that the non-AP STA MLD receives the buffered downlink data frame in a link corresponding to the first bit with the first value in the multi-links. Correspondingly, in the case that the corresponding first bit is set to a second value (e.g., but not limited to "0"), it is indication information identifying that the non-AP STA MLD does not receive the buffered downlink data frame in such a link. The information field that multiple links respectively corresponding to multiple first bits can specifically and clearly define in which link(s) the non-AP STA MLD can receive the buffered downlink data frame(s), thus increasing a flexibility of the system.

For example, as described with reference to FIG. 1, when the AP MLD and non-AP STA MLD support n links, the information field in the first message frame may include n bits respectively corresponding to the n links. When one or more bits of the n bits are set to "1", it can be identified that the buffered downlink data frame(s) is received in one or more links respectively corresponding to the one or more bits with "1". As a non-limiting embodiment, the non-AP STA MLD and the AP MLD may support 16 links (e.g., in FIG. 1, a value of n may be 16), and since each data frame may map a corresponding TID and the TID may be mapped to each link, the information field in the first message frame may be defined to be at least 16 bits, each corresponding to one of the 16 links. Combined with the embodiment of FIG. 1, when n is 16, a lowest bit corresponds to the first link: Link1, and a highest bit corresponds to a 16th link: Link16, and if the information field in the first message frame is set to "0000 0000 0000 0011", it can be identified that buffered downlink data frames are received in the first link: Link1 and the second link: Link2. However, the present disclosure is not limited to this. For example, it is feasible that the lowest bit can correspond to the 16th link: Link16 and the highest bit can correspond to the first link: Link1. In this case, it is possible to identify that buffered downlink data frames are received in a 15th link: Link15 and the 16th link: Link16.

According to another embodiment of the present disclosure, the information field in the first message frame may include a plurality of bits, but the plurality of bits does not necessarily correspond to multi-links supported by the AP MLD and non-AP STA MLD, respectively. For example, the information field in the first message frame may include information indicating an initial link of the non-AP STA MLD to receive the buffered downlink data frame and offset information. This is described with reference to FIG. 1. As a non-limiting embodiment, when the information of the initial link indicates a third link: Link3 of the n links and the offset information indicates five links, the information field thus set up may indicate that the non-AP STA MLD receives the buffered downlink data frames from the third link: Link3 to an eighth link: Link8.

According to another embodiment of the present disclosure, the information field in the first message frame may include a second bit, where in the case that the second bit is set to a first value (e.g., but not limited to "1"), it is indication information identifying that the non-AP STA MLD receives the buffered downlink data frame(s) in all links. In this case, the information field in the first message frame may include a second bit which is only one bit, and the second bit may correspond to all links supported by the AP MLD and non-AP STA MLD. For example, considering that the TID may be mapped to all links, the information field in the first message frame can add one bit to identify that the buffered downlink data frame can be received through all active links. The information field identifying, by a second bit, indication information that the non-AP STA MLD receives the buffered downlink data frame(s) in all links can have fewer bits, thereby simplifying instructions and facilitating device power savings. However, embodiments of the present disclosure are not limited to this. For example, the information field in the first message frame may not include the second bit, but the first bits corresponding to all active links may be set to, for example, "1", to indicate that the non-AP STA MLD can receive the buffered downlink data frame in the all active links.

For example, the information field in the first message frame may be set in correspondence with a status code of sending a link in the first message frame. Specifically, when a status code of sending a link in the first message frame is identified as refused/rejected, all the first bits or the second bit of the information field in the first message frame are set to a second value (for example, "0") to identify indication information that the non-AP STA MLD does not receive the buffered downlink data frame(s) in all links.

For example, when the first message frame is an association response frame, a re-association response frame, a multi-link setup response frame, a re-multi-link setup response frame, or a TID-to-Link mapping response frame, if the status code in the first message frame is set as refused, the AP MLD refuses to set up an (re)association link with the non-AP STA MLD or refuses a TID-to-Link mapping, the AP MLD and the non-AP STA MLD cannot perform multi-link traffic, and therefore a corresponding information field can be set to indicate that the non-AP STA MLD dose not to receive the buffered downlink data frames through all links.

Referring back to FIG. 2, at step 220, the first message frame determined in step 210 may be sent. For example, the first message frame may be sent to the non-AP STA MLD in any of the multi-links supported by the AP MLD.

Furthermore, it will be understood that the communication method shown in FIG. 2 is only exemplary, and the present disclosure is not limited thereto. For example, before step 210, the AP MLD may receive a second message frame from the non-AP STA MLD, for example, the second message frame may be an association request frame, a re-association request frame, a multi-link setup request frame, a re-multi-link setup request frame, or a TID-to-Link mapping request frame.

According to an embodiment of the present disclosure, after defining one or more links for the non-AP STA MLD to receive the buffered downlink data frame by the communication method shown in FIG. 2, during a communication, the AP MLD may define a multi-link traffic information element and indicate a buffering situation of the data frame in the links indicated in the information field defined with reference to FIG. 2 through a per-link traffic indication bitmap in the multi-link traffic information element. For example, when a value of a corresponding position of a bitmap is set to "1", there is a buffered downlink data frame in a link corresponding to the corresponding position of the bitmap. Correspondingly, the non-AP STA MLD can determine the link having the buffered downlink data frame by parsing the corresponding bitmap.

According to the communication method of the embodiment of the present disclosure, a link for non-AP STA MLD to receive the buffered downlink data frame can be defined, enabling an application of multi-link traffic mechanism and improving spectrum utilization.

FIG. 3 is a flowchart illustrating a multi-link communication method according to an embodiment of the present disclosure. The communication method shown in FIG. 3 can be applied to a station supporting multi-link traffic, for example, the non-AP STA MLD shown in FIG. 1.

Referring to FIG. 3, at step 310, a first message frame can be received, where the first message frame may include an information field defining a link that supports the non-AP STA MLD to receive a buffered downlink data frame. For example, the first message frame may be received in any of multiple links (multi-links) supported by the non-AP STA MLD, or in any of the multi-links in which the AP MLD sets up a communication with the non-AP STA MLD.

According to an embodiment of the present disclosure, the first message frame may be, for example, but not limited to, an association response frame, a re-association response frame, a multi-link setup response frame, a re-multi-link setup response frame, or a TID-to-Link mapping response frame.

As an embodiment of the present disclosure, the information field may be included in an MAC frame header portion of the first message frame.

According to an embodiment of the present disclosure, the information field in the first message frame may include a plurality of first bits respectively corresponding to multi-links supported by the AP MLD and the non-AP STA MLD. In the case that a corresponding first bit is set to a first value (for example, "1"), it is indication information identifying that the non-AP STA MLD receives the buffered downlink data frame in a link corresponding to the first bit with the first value in the multi-links.

According to an embodiment of the present disclosure, the information field in the first message frame may include a second bit, where in the case that the second bit is set to a first value (for example, "1"), it is indication information identifying that the non-AP STA MLD receives the buffered downlink data frame(s) in all links.

According to an embodiment of the present disclosure, when a status code of sending a link in the first message frame is identified as refused, all the first bits or the second bit of the information field in the first message frame are set to a second value to identify indication information that the non-AP STA MLD does not receive the buffered downlink data frame(s) in all links.

The embodiments of the first message frame, the information field, the first bit, the second bit and the status code described in step 210 above can be applied here, and repeated descriptions are omitted here to avoid redundancy.

Continuing with reference to FIG. 3, at step 320, a communication operation can be performed based on the first message frame. For example, the non-AP STA MLD can parse the information field of the first message frame, and based on a link defined in the information field, an affiliated STA corresponding to the defined link can wake up periodically to receive the buffered downlink data frame for it.

It will be understood that the communication method shown in FIG. 3 is only exemplary, and the present disclosure is not limited to this. For example, before step 310, the non-AP STA MLD may send a second message frame to the AP MLD. For example, the second message frame may be an association request frame, a re-association request frame, a multi-link setup request frame, a re-multi-link setup request frame, or a TID-to-Link mapping request frame.

FIG. 4 is a block diagram illustrating a multi-link communication apparatus according to an embodiment of the present disclosure.

Referring to FIG. 4, a communication apparatus 400 may include a processing module 410 and a transceiving module 420. The communication apparatus 400 shown in FIG. 4 may be applied to an AP MLD or a non-AP STA MLD.

In the case where the communication apparatus shown in FIG. 4 is applied to the AP MLD, the processing module 410 may be configured to: determine a first message frame, where the first message frame may include an information field defining one or more links of a station (the non-AP STA MLD) supporting multi-link traffic to receive a buffered downlink data frame; and the transceiving module 420 may be configured to send the first message frame. The embodiments of the first message frame, the information field, the first bit, the second bit and the status code described in the above embodiments can be applied here, and repeated descriptions are omitted here to avoid redundancy. In this case, the communication apparatus 400 can perform the communication method described with reference to FIG. 2, and the repeated description is omitted here for brevity.

In the case where the communication apparatus shown in FIG. 4 is applied to the non-AP STA MLD, the transceiving module 420 may be configured to: receive a first message frame, where the first message frame may include an information field defining one or more links of a station (the non-AP STA MLD) supporting multi-link traffic to receive a buffered downlink data frame; and the processing module 410 may be configured to perform a communication operation based on the first message frame. The embodiments of the first message frame, the information field, the first bit, the second bit and the status code described in the above embodiments can be applied here, and repeated descriptions are omitted here to avoid redundancy. In this case, the communication apparatus 400 can perform the communication method described with reference to FIG. 3, and the repeated description is omitted here for brevity.

In addition, the communication apparatus 400 shown in FIG. 4 is only exemplary, and the embodiment of the present disclosure is not limited to this. For example, the communication apparatus 400 may also include other modules, such as a memory module. In addition, each module in the communication apparatus 400 may be combined into a more complex module or may be divided into more individual modules.

According to the communication method and the communication apparatus of the embodiments of the present disclosure, a link for non-AP STA MLD to receive the buffered downlink data frame can be defined, enabling an application of multi-link traffic mechanism and improving spectrum utilization.

Based on the same principle as the method provided by the embodiment of the present disclosure, the embodiment of the present disclosure further provides an electronic device, which includes a processor and a memory; where the memory stores a machine-readable instruction (which may also be referred to as a "computer program"); and a processor is configured to execute the machine-readable instruction to implement the methods described with reference to FIGS. 2 and 3.

An embodiment of the present disclosure further provides a computer-readable storage medium having a computer program stored thereon, which when executed by a processor implements the methods described with reference to FIGS. 2 and 3.

In an example embodiment, the processor may be a logic block, module and circuit for implementing or executing various examples described in connection with the present disclosure, for example, a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. The processor can also be a combination that realizes computing functions, for example, including one or more microprocessor combinations, DSP and microprocessor combinations, etc.

In an example embodiment, the memory may be, for example, a read only memory (ROM), a random access memory (RAM), an electrically erasable programmable read only memory (EEPROM), a compact disc read only memory (CD-ROM) or other optical disc storage, optical disc storage (including compact disc, laser disc, optical disc, digital versatile disc, Blu-ray disc, etc.), magnetic disc storage medium or other magnetic storage devices, or any other medium that can be used to carry or store program codes in the form of instructions or data structures and can be accessed by a computer, but is not limited to this.

It should be understood that although the various steps in the flowchart of the accompanying drawings are shown sequentially as indicated by the arrows, the steps are not necessarily performed sequentially in the order indicated by the arrows. Unless explicitly stated herein, the execution of these steps is not strictly limited in order, and they can be executed in other orders. In addition, at least a part of the steps in the flowchart of the accompanying drawings may include a plurality of sub-steps or stages, which may not necessarily be completed at the same time, but may be executed at different times, and the execution order may not necessarily be sequential, but may be executed alternately or alternatively with other steps or at least a part of sub-steps or stages of other steps.

While the present disclosure has been shown and described with reference to certain embodiments of the present disclosure, those skilled in the art will appreciate that various changes in form and detail can be made without departing from the scope of the present disclosure. Therefore, the scope of the present disclosure should not be limited by the embodiments, but should be defined by the appended claims and their equivalents.

## Claims

1. A multi-link communication method, performed by an access point supporting multi-link traffic, comprising:
determining a first message frame, wherein the first message frame comprises an information field indicating one or more links of a station supporting multi-link traffic to receive a buffered downlink data frame; and
sending the first message frame.

2. The multi-link communication method according to claim 1, wherein the information field comprises a plurality of first bits respectively corresponding to multi-links supported by the access point and the station, and
when a corresponding first bit is set to a first value, indication information identifies that the station receives the buffered downlink data frame in a link corresponding to the corresponding first bit in the multi-links.

3. The multi-link communication method according to claim 1, wherein the information field comprises a second bit, and when the second bit is set to a first value, indication information identifies that the station receives the buffered downlink data frame in all links.

4. The multi-link communication method according to claim 1, wherein the information field is comprised in a media access control MAC frame header portion of the first message frame.

5. The multi-link communication method according to any one of claims 1 to 4, wherein the first message frame comprises an association response frame, a re-association response frame, a multi-link setup response frame, a re-multi-link setup response frame, or a TID-to-Link mapping response frame.

6. The multi-link communication method according to claim 5, wherein when a status code of sending a link in the first message frame is identified as refused, all the first bits or the second bit of the information field are set to a second value to identify indication information that the station does not receive the buffered downlink data frame in all links.

7. A multi-link communication method, performed by a station supporting multi-link traffic, comprising:
receiving a first message frame, wherein the first message frame comprises an information field defining one or more links of the station supporting multi-link traffic to receive a buffered downlink data frame; and
performing a communication operation based on the first message frame.

8. The multi-link communication method according to claim 7, wherein the information field comprises a plurality of first bits respectively corresponding to multi-links supported by an access point and the station, and
when a corresponding first bit is set to a first value, indication information identifies that the station receives the buffered downlink data frame in a link corresponding to the corresponding first bit in the multi-links.

9. The multi-link communication method according to claim 7, wherein the information field comprises a second bit, and when the second bit is set to a first value, indication information identifies that the station receives the buffered downlink data frame in all links.

10. The multi-link communication method according to claim 7, wherein the information field is comprised in a media access control MAC frame header portion of the first message frame.

11. The multi-link communication method according to any one of claims 7 to 10, wherein the first message frame comprises an association response frame, a re-association response frame, a multi-link setup response frame, a re-multi-link setup response frame, or a TID-to-Link mapping response frame.

12. The multi-link communication method according to claim 11, wherein when a status code of sending a link in the first message frame is identified as refused, all the first bits or the second bit of the information field are set to a second value to identify indication information that the station does not receive the buffered downlink data frame in all links.

13. A multi-link communication apparatus, applied to an access point supporting multi-link traffic, comprising:
a processing module, configured to determine a first message frame, wherein the first message frame comprises an information field defining one or more links of a station supporting multi-link traffic to receive a buffered downlink data frame; and
a transceiving module, configured to send the first message frame.

14. A multi-link communication apparatus, applied to a station supporting multi-link traffic, comprising:
a transceiving module, configured to receive a first message frame, wherein the first message frame comprises an information field defining one or more links of the station supporting multi-link traffic to receive a buffered downlink data frame; and
a processing module, configured to perform a communication operation based on the first message frame.

15. An electronic apparatus, comprising a memory, a processor and a computer program stored in the memory and executable on the processor, wherein the processor, when executing the computer program, implements the method according to any one of claims 1 to 6 or any one of claims 7 to 12.

16. A computer-readable storage medium, wherein a computer program is stored on the computer-readable storage medium, and the computer program, when executed by a processor, implements the method according to any one of claims 1 to 6 or any one of claims 7 to 12.
